# EUROPÄISCHE PATENTANMELDUNG

(11) **EP 1 279 470 A1**
(43) Veröffentlichungstag der Anmeldung: **29.01.2003**
(21) Anmeldenummer: 02016461.2
(22) Anmeldetag: 23.07.2002
(51) Int. Cl.: B27K 3/15, B27K 3/34

(54) **Holzelement für Bodenbeläge**

(30) Priorität: 24.07.2001 DE 20112198 U
(71) Anmelder: Firma Jakob Schmid Söhne GmbH & Co. KG, 72108 Rottenburg (DE)
(72) Erfinder: Stange, Uwe, 77971 Kippenheim (DE)
(74) Vertreter: Möbus, Daniela, Dr.-Ing.

(57) **Zusammenfassung**

Ein Holzelement für Bodenbeläge, wobei das Holzelement durch einen unter Feuchtigkeit aushärtenden Polyurethan gehärtet ist.

## Beschreibung

Holzböden vermitteln stets eine wohnliche Atmosphäre. Holz wird außerdem als nachwachsender Rohstoff auch unter ökologischen Gesichtspunkten zunehmend für Bodenbeläge nachgefragt, nicht nur für Wohnräume, sondern auch für Büros und Gewerberäume. Beim Einsatz von Holzböden im gewerblichen Bereich besteht jedoch die Gefahr, dass Feuchtigkeit, die zu Quellungen des Holzes führt, in den Bodenbelag eindringt. Auch die mechanische Belastung des Bodens ist im gewerblichen Bereich natürlich deutlich höher als im Wohnbereich. Bisher bekannte Beschichtungsmaterialien, die bei Laminaten das Eindringen von Feuchtigkeit verhindern oder mindestens verzögern, haben sich bei der Anwendung in der Parkettindustrie aufgrund von Applikationsproblemen und hohen Kosten nicht bewährt.

Im Parkettbereich ist als einziges besonders strapazierfähiges Fertigparkett ist ein Zweischichtparkett bekannt, dessen 4 mm starke Nutzschicht durchgehend mit einem Harz getränkt und gehärtet ist. Die Härte und Verschleißfestigkeit dieses Parketts ist ungefähr dreimal so hoch wie bei herkömmlichen Parketten. Allerdings stellen die Harze unter ökologischen Gesichtspunkten ein Problem dar. Die Harze enthalten in aller Regel Formaldehyde, die sowohl bei der Produktion als auch während des Gebrauchs des Parketts zu Gesundheitsgefährdungen führen können. Außerdem ist die Entsorgung von mit Harzen getränkten Hölzern ein Problem, da diese die biologische Abbaubarkeit des Holzes beeinträchtigen können.

Der vorliegenden Erfindung liegt die Aufgabe zugrunde, Holzelemente für Bodenbeläge zu schaffen, die feuchtigkeitsunempfindlich sind und eine große Härte aufweisen, sodass sie auch im gewerblichen Bereich einsetzbar sind, und die die oben genannten Nachteile vermeiden.

Die Aufgabe wird mit einem Holzelement für Bodenbeläge gelöst, das erfindungsgemäß dadurch gekennzeichnet ist, dass es durch einen unter Feuchtigkeit aushärtenden Polyurethan gehärtet ist. Vorzugsweise kann dabei das Holzelement über sein gesamtes Volumen gehärtet sein. Dann ist die Feuchtigkeitsunempfindlichkeit und die erzielbare Härte optimal. Polyurethan hat gegenüber Harzen den Vorteil, dass die Verarbeitung ausgesprochen einfach und gesundheitlich unbedenklich ist. Auch die Entsorgung von mit Polyurethan getränkten und gehärteten Holzelementen ist weniger problematisch als von mit Harzen gehärteten Hölzern. Das Polyurethan lässt sich dabei in unterschiedlichen Verfahren auf das Holzelement anwenden. Bei sehr dünnen Elementen kann ein einfaches Tränken ausreichen. Bei dickeren Hölzern können Druckverfahren oder Vakuumverfahren eingesetzt werden.

Das erfindungsgemäße Holzelement kann sowohl eine Deckschicht eines Fertigparketts oder aber auch Teil eines massiven Parketts sein. Polyurethan lässt sich nämlich auch bei stärkeren Hölzern in das gesamte Volumen des Holzes einbringen.

Das erfindungsgemäße Holzelement vereinigt somit die Vorteile einer geringen Feuchtigkeitsaufnahme und einer großen Härte mit einer guten Umweltverträglichkeit und einer fast beliebigen Verarbeitbarkeit.

## Patentansprüche

1. Holzelement für Bodenbeläge, **dadurch gekennzeichnet, dass** es durch einen unter Feuchtigkeit aushärtenden Polyurethan gehärtet ist.

2. Holzelement nach Anspruch 1, **dadurch gekennzeichnet, dass** es über sein gesamtes Volumen gehärtet ist.

3. Holzelement nach Anspruch 1 oder 2, **dadurch gekennzeichnet, dass** der Polyurethan durch Tränken, durch Druck- oder durch Vakuumerzeugung in das Element eingebracht ist.

4. Holzelement nach einem der Ansprüche 1 bis 3, **dadurch gekennzeichnet, dass** es die Deckschicht eines Fertigparketts ist.

5. Holzelement nach einem der Ansprüche 1 bis 3, **dadurch gekennzeichnet, dass** es eine Diele eines Massivparketts ist.
